# EUROPÄISCHE PATENTSCHRIFT

(11) **EP 3 649 353 B1**
(45) Veröffentlichungstag und Bekanntmachung des Hinweises auf die Patenterteilung: **01.09.2021**
(21) Anmeldenummer: 18737571.2
(22) Anmeldetag: 02.07.2018
(51) Int. Cl.: F16B 7/18, F16B 37/04

(54) **BEFESTIGUNGSANORDNUNG**
FASTENING ARRANGEMENT
SYSTÈME DE FIXATION

(30) Priorität: 03.07.2017 DE 102017006233
(43) Veröffentlichungstag der Anmeldung: 13.05.2020
(73) Patentinhaber: Pies, Gerrit, 42699 Solingen (DE); Rixen, Wolfgang, 42699 Solingen (DE)
(72) Erfinder: MEYER, Torsten, 42657 Solingen (DE)
(74) Vertreter: BRP Renaud & Partner mbB Rechtsanwälte Patentanwälte Steuerberater
(86) Internationale Anmeldenummer: PCT/EP2018/067831
(87) Internationale Veröffentlichungsnummer: WO 2019/007911

(56) Entgegenhaltungen:
- EP-B1- 2 885 545
- WO-A1-2016/200963
- DE-U1-202010 008 312
- US-A1- 2003 091 384

## Beschreibung

Die vorliegende Erfindung betrifft eine Befestigungsanordnung mit einem eine hinterschnittene Nut aufweisenden ersten Bauteil und einem eine Durchgangsöffnung aufweisenden zweiten Bauteil gemäß dem Oberbegriff des Anspruchs 1.

Aus der DE 20 2010 008 312 U1 ist eine als Hammerkopfschraube ausgebildete Befestigungseinrichtung bekannt, wobei Ausrichtkonturen vorgesehen sind, die mehrere punktsymmetrisch zur Achse ausgerichtete und einen Drall erzeugende Ausrichtschrägen aufweisen.

Aus der EP 2 885 545 B1 ist eine gattungsgemäße Befestigungsanordnung mit einem eine hinterschnittene Nut aufweisenden ersten Bauteil und mit einem eine Durchgangsöffnung aufweisenden zweiten Bauteil bekannt, wobei das zweite Bauteil über eine durch die Durchgangsöffnung desselben geführte und im Wesentlichen senkrecht in die Nut des ersten Bauteils eingreifende Befestigungseinrichtung an letzterem fixierbar ist. Die bekannte Befestigungseinrichtung weist dabei eine Hammerkopfschraube auf, die an einem ersten Ende ihres Schaftes, also direkt benachbart eines Kopfes, zwei kleine Nasen aufweist, welche in entsprechende Mäuler eines Verbindungselements hineinragen und so eine Drehwinkelbegrenzung bewirken. Darüber hinaus weist die Hammerkopf-schraube einen Freiformkopf auf, der bewirkt, dass sich die Hammerkopf-schraube selbständig in Nutrichtung dreht.

Generell besteht bei bekannten Nutensteinen das Problem, dass diese erst in eine vordefinierte Lage zur Nut bzw. Profilnut gebracht werden müssen, um diese dort einsetzen zu können. Auch bei der aus der EP 2 885 545 B1 bekannten Hammerkopfschraube besteht dabei das Problem, dass diese in einem vordefinierten Winkelbereich von 45 Grad vor dem Aufsetzen auf die Nut ausgerichtet werden muss, um den für das endgültige Ausrichten der Hammerkopfschraube erforderlichen Drall erzeugen zu können. Dies ist zwar geringfügig weniger aufwändig als bei einem herkömmlichen Nutenstein, jedoch kann auf das aufwändige Ausrichten der Hammerkopfschraube ebenfalls nicht verzichtet werden.

Die vorliegende Erfindung beschäftigt sich daher mit dem Problem, für eine Befestigungsanordnung der gattungsgemäßen Art eine verbesserte oder zumindest alternative Ausführungsform anzugeben, die insbesondere die aus dem Stand der Technik bekannten Nachteile überwindet.

Dieses Problem wird erfindungsgemäß durch den Gegenstand des unabhängigen Anspruchs gelöst. Vorteilhafte Ausführungsformen sind Gegenstand der abhängigen Ansprüche.

Die vorliegende Erfindung beruht auf dem allgemeinen Gedanken, erstmals eine Befestigungseinrichtung zum Befestigen eines eine hinterschnittene Nut aufweisenden ersten Bauteils mit einem eine Durchgangsöffnung aufweisenden zweiten Bauteil mittels einem Hammerkopfelement sowie einem damit verschraubbaren Haltelement zu bewirken, wobei das Hammerkopfelement derart ausgebildet ist, dass es unabhängig von seiner Drehwinkellage zur Nut problemlos durch ein einfaches Andrücken auf die Nut um seine Achse verdrehbar und damit in die Nut einführbar ist. Eine Ausführungsform der erfindungsgemäßen Befestigungsanordnung weist dabei ein eine hinterschnittene Nut, beispielsweise eine Profilnut, aufweisendes erstes Bauteil sowie ein eine Durchgangsöffnung aufweisendes zweites Bauteil auf. Das zweite Bauteil ist dabei über die durch die Durchgangsöffnung desselben geführte und senkrecht in die Nut eingreifende Befestigungseinrichtung am ersten Bauteil fixiert bzw. fixierbar. Die Befestigungseinrichtung weist somit eine Achse auf, die bei montierter Befestigungseinrichtung senkrecht zur Nut ausgerichtet ist. Erfindungsgemäß umfasst nun die Befestigungseinrichtung das zuvor erwähnte Hammerkopfelement sowie das damit verschraubbare Halteelement. Von besonderem Vorteil ist dabei, dass das Hammerkopfelement und das damit verschraubte Halteelement in am zweiten Bauteil montiertem Zustand unbegrenzt um die Achse drehbar sind, was einen deutlichen Unterschied zu der aus der DE 20 2012 007 790 U1 bekannten Befestigungsanordnung darstellt, bei welcher das Hammerkopfelement nur um einen kleinen Winkelbereich β bezüglich des zweiten Bauteils (Befestigungskörper) verdrehbar war. Das Hammerkopfelement weist dabei an einer der Nut des ersten Bauteils zugewandten Seite Ausrichtkonturen auf, die derart ausgebildet sind, dass sie bei einem Andrücken der Ausrichtkonturen an die Nut unabhängig von deren Drehstellung um die Achse eine eintauchfähige Ausrichtung des Hammerkopfelements zur Nut bewirken. Ein vorheriges Ausrichten des Hammerkopfelements, wie beispielsweise bei der aus dem Stand der Technik bekannten Hammerkopfschraube, ist somit nicht mehr erforderlich, wodurch das Befestigen deutlich einfacher, schneller und damit nicht nur komfortabler, sondern auch kostengünstiger erfolgen kann.

Bei einer vorteilhaften Weiterbildung der Erfindung ist vorgesehen, dass das Hammerkopfelement als eine ein Innengewinde aufweisende Hammerkopfmutter und das Halteelement als eine darin einschraubbare Schraube, oder dass das Hammerkopfelement als eine Hammerkopfschraube und das Halteelement als eine darauf aufschraubbare Mutter ausgebildet sind. Dies stellt klar, dass es für die erfindungsgemäße Befestigungsanordnung unerheblich ist, ob es sich bei dem Hammerkopfelement um eine Hammerkopfmutter oder eine Hammerkopfschraube handelt. Im Vergleich zu den aus dem Stand der Technik bekannten Befestigungsanordnungen ist es somit bei der erfindungsgemäßen Befestigungsanordnung mit der Befestigungseinrichtung entsprechend der ersten Alternative möglich, diese durch ein einfaches Durchführen der Schraube durch die Durchgangsöffnung des zweiten Bauteils und ein zumindest geringfügiges Aufschrauben der Hammerkopfmutter auf die Schraube vorzubereiten und durch ein einfaches Andrücken auf die Nut des ersten Bauteils mit der Hammerkopfmutter in die Nut einzuführen. Anschließend kann durch ein Verdrehen der Schraube die in die Nut eingeführte Hammerkopfmutter verdreht werden, bis sich diese um ca. 90 Grad verdreht und dann über zwei als Nasen ausgebildete Eckbereiche an den beiden Nutflanken abstützt und an einem weiteren Verdrehen gehindert wird. Rein theoretisch ist selbstverständlich auch denkbar, dass ein Abstützen der Hammerkopfmutter beim Verdrehen über andere als die Eckbereiche, beispielsweise in der hinterschnittenen Profilnut selbst, erfolgt und darüber eine drehfeste Fixierung der Hammerkopfmutter in der Profilnut bewirkt. Analog funktioniert dies auch bei einem als Hammerkopfschraube ausgebildeten Hammerkopfelement mit einer als Halteelement ausgebildeten Mutter.

Bei einer vorteilhaften Weiterbildung der erfindungsgemäßen Lösung sind die Ausrichtkonturen integral an dem Hammerkopfelement ausgeformt. Die Ausrichtkonturen können dabei insbesondere bei einem aus Kunststoff oder aus Metall hergestellten Hammerkopfelement einfach zusammen mit dem Hammerkopfelement in einem Kunststoffspritzgießvorgang oder einem Gieß- bzw. Prägevorgang hergestellt werden, wodurch lediglich ein einziges Mal eine entsprechende Negativform hergestellt werden muss. Hierdurch kann das erfindungsgemäße Hammerkopfelement kostengünstig und zugleich qualitativ hochwertig hergestellt werden.

Bei einer weiteren vorteilhaften Ausführungsform der erfindungsgemäßen Lösung sind die Ausrichtkonturen punktsymmetrisch zur Achse des Hammerkopfelements ausgebildet und können darüber hinaus mehrere punktsymmetrisch zur Achse ausgerichtete und einen Drall erzeugende Ausrichtschrägen aufweisen. Diese Ausrichtschrägen bzw. generell die Ausrichtkonturen können dabei vorzugsweise eine konvexe Form aufweisen und unterstützen dadurch die drallerzeugende Wirkung beim Andrücken des Hammerkopfelements an die Nut bzw. die Nutflanken.

Selbstverständlich sind auch konkave Formen der Ausrichtkonturen bzw. Ausrichtschrägen denkbar.

Zweckmäßig sind zumindest zwei benachbarte Ausrichtkonturen bzw. Ausrichtschrägen über abgerundete Grate miteinander verbunden. Derartige abgerundete Grate verhindern insbesondere ein Verkanten des Hammerkopfelements beim Einführen in die Nut und erleichtern damit die Montage der erfindungsgemäßen Befestigungsanordnung.

Vorteilhafterweise ist vorgesehen, dass zwei Grate die Achse kreuzen, wogegen die übrigen Grate die Achse nicht kreuzen. Die genannten zwei Grate verlaufen vom jeweiligen Eckbereich des als Hammerkopfmutter ausgebildeten Hammerkopfelements hin zur durch ein Innengewinde gebildeten Durchgangsöffnung. Dabei treffen sich die einzelnen Grate an einem Rand der Durchgangsöffnung an zwei gegenüberliegenden Punkten. Auch hierdurch kann erreicht werden, dass das Hammerkopfelement vollständig drehwinkelunabhängig auf die Nut aufgesetzt werden kann und sich durch leichten Druck selbst ausrichtet.

Bei einer weiteren vorteilhaften Ausführungsform der erfindungsgemäßen Lösung ist an mittelbaren oder unmittelbaren Kontaktstellen zwischen dem Hammerkopfelement und dem Halteelement eine reibungserhöhende Schicht oder Strukturierung vorgesehen, die bei einem Drehen des Halteelements ein Mitnehmen des Hammerkopfelements bewirkt. Dies kann beispielsweise durch einen entsprechenden Kunststoffeinsatz im Innengewinde des als Hammerkopfmutter ausgebildeten Hammerkopfelements bewirkt werden, welcher in ähnlicher Weise auch bei selbstsichernden Muttern zum Einsatz kommt. Alternativ oder zusätzlich ist selbstverständlich auch denkbar, dass eine derartige reibungserhöhende Schicht oder Strukturierung am Außengewinde des als Schraube ausgebildeten Halteelements angeordnet ist.

Bei einer weiteren vorteilhaften Ausführungsform der erfindungsgemäßen Lösung weist das Hammerkopfelement auf seiner den Ausrichtkonturen abgewandten Seite einen Axialfortsatz auf, der in Axialansicht gesehen zwei diagonal gegenüberliegende, rechtwinkelige Eckbereiche, kurz auch Nasen genannt, besitzt. Diese beiden Nasen gehen über zwei gegenüberliegende kreisbogenförmige Bereiche ineinander über, wobei die beiden rechtwinkeligen Eckbereiche in einem Montagezustand nach einem vollständigen Eintauchen des Hammerkopfelements in die Nut an entsprechenden Nutflanken drehbegrenzend anliegen und lediglich eine Verdrehung des Hammerkopfelements um ca. 90 Grad in der Nut bzw. Profilnut zulassen. Der Axialfortsatz und die daran angeordneten kreisbogenförmigen Bereiche bzw. rechtwinkeligen Eckbereiche (Nasen) können dabei ebenfalls integral mit dem Hammerkopfelement ausgebildet und dadurch ebenfalls wiederum kostengünstig und zugleich qualitativ hochwertig hergestellt werden.

Bei einer vorteilhaften Weiterbildung der erfindungsgemäßen Lösung ist das erste Bauteil als Profilstab ausgebildet. Derartige Profilstäbe finden vieler Ort Verwendung, beispielsweise im Anlagen- und Maschinenbau, im Messebau, aber auch beim Gerüstbau, beispielsweise für nichttragende Wände. Zum Anbau von weiteren Bauteilen, hier dem zweiten Bauteil, ist es deshalb erforderlich, eine möglichst einfach zu montierende, zugleich aber eine zuverlässige Fixierung bietende Befestigungsanordnung zu schaffen. Rein theoretisch ist dabei auch denkbar, dass auch das zweite Bauteil ein Profilstab ist, sodass zwei derartige Profilstäbe vorgesehen sind und wobei das zweite Bauteil zwei Durchgangsöffnungen aufweist, in welchen jeweils eine Befestigungseinrichtung angeordnet ist, so dass über ein derartiges, zwei Befestigungseinrichtungen aufweisendes zweites Bauteil eine Verbindung zweier erster Bauteile miteinander möglich ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch
- Fig. 1a-e: einzelne Verfahrensschritte A-E zur Montage einer erfindungsgemäßen Befestigungsanordnung,
- Fig. 2: eine Schnittdarstellung entsprechend der Schnittebene E-E aus Fig. 1e bei angezogener Befestigungsanordnung,
- Fig. 3: eine Hammerkopfmutter für eine erfindungsgemäße Befestigungsanordnung in einer Ansicht,
- Fig. 4: eine Darstellung der Hammerkopfmutter von unten,
- Fig. 5: eine Darstellung der Hammerkopfmutter von oben,
- Fig. 6: eine Schnittdarstellung entlang der Schnittebene D-D,
- Fig. 7: eine Ansicht auf die Hammerkopfmutter aus der Perspektive A,
- Fig. 8: eine erfindungsgemäße Befestigungseinrichtung mit einem als Hammerkopfschraube ausgebildeten Hammerkopfelement und einem als Mutter ausgebildeten Halteelement in einer Explosionsdarstellung.

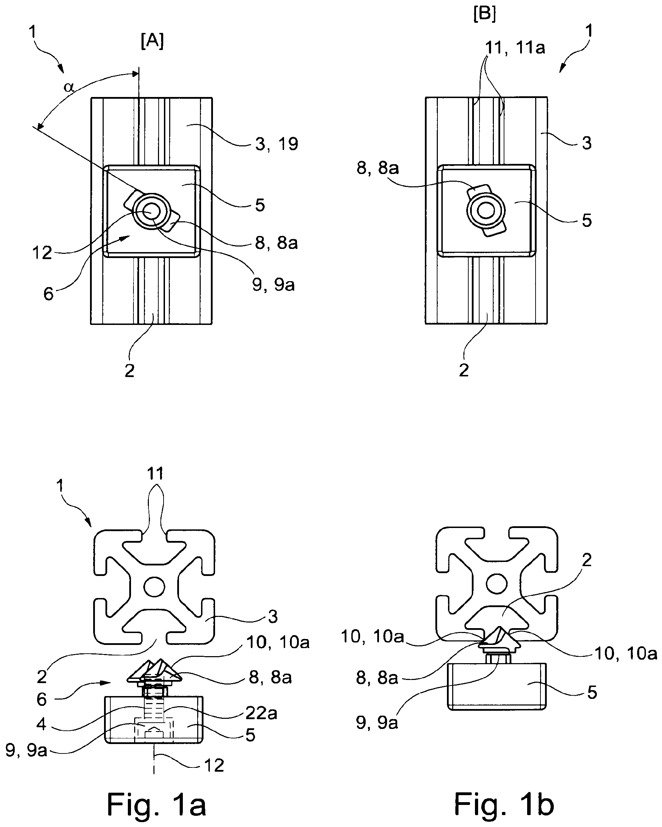

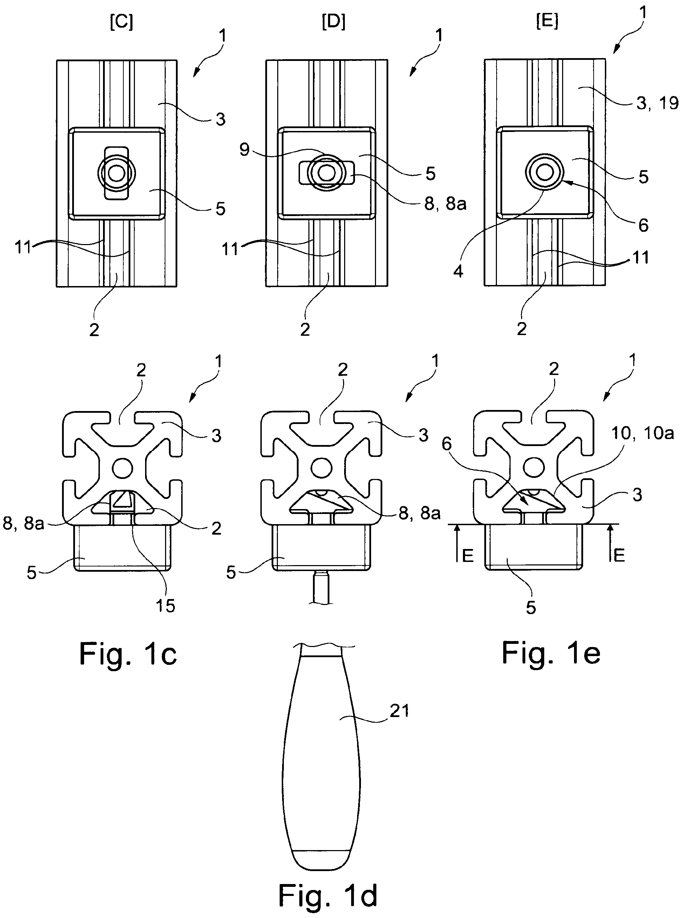

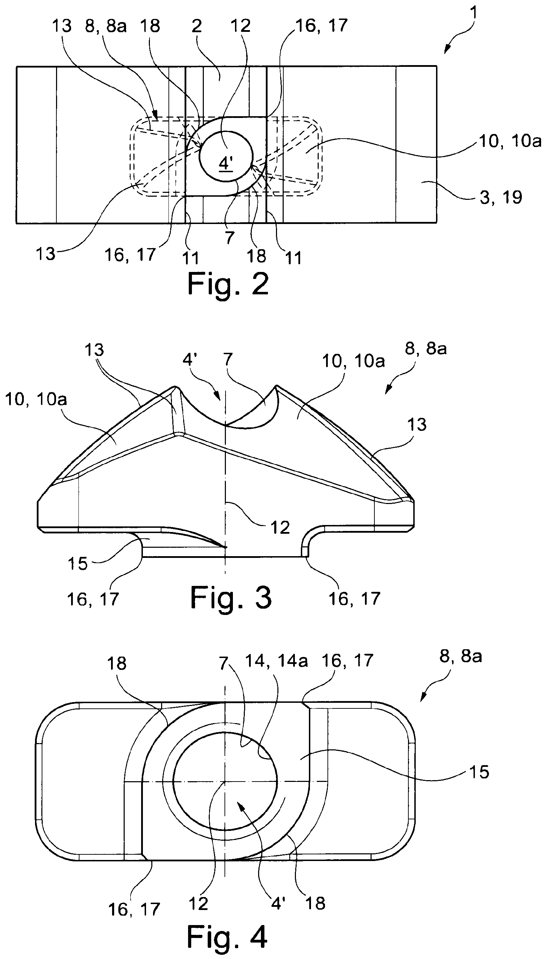

Entsprechend den Fig. 1 und 2, weist eine erfindungsgemäße Befestigungsanordnung 1 ein eine hinterschnittene Nut 2, beispielsweise eine Profilnut, aufweisendes erstes Bauteil 3 sowie ein eine Durchgangsöffnung 4 aufweisendes zweites Bauteil 5 auf. Ebenfalls vorgesehen ist eine Befestigungseinrichtung 6 zum Befestigen des zweiten Bauteils 5 am ersten Bauteil 3. Das zweite Bauteil 5 ist dabei über die durch die Durchgangsöffnung 4 desselben geführte und senkrecht in die Nut 2 eingreifende Befestigungseinrichtung 6 am ersten Bauteil 3 fixiert. Erfindungsgemäß umfasst nun die Befestigungseinrichtung 6 ein Hammerkopfelement 8 (vergleiche auch die Figuren 3 bis 7) sowie ein damit verschraubbares Halteelement 9. Das Hammerkopfelement 8 und das damit verschraubte Halteelement 9 sind in am zweiten Bauteil 5 montiertem Zustand unbegrenzt um die Achse 12 drehbar, wobei das Hammerkopfelement 8 an einer der Nut 2 zugewandten Seite Ausrichtkonturen 10 aufweist, die derart ausgebildet sind, dass diese bei einem Andrücken an die Nut 2 unabhängig von der Drehstellung um die Achse 12 des Hammerkopfelements 8 eine eintauchfähige Ausrichtung des Hammerkopfelements 8 zur Nut 2 einstellen.

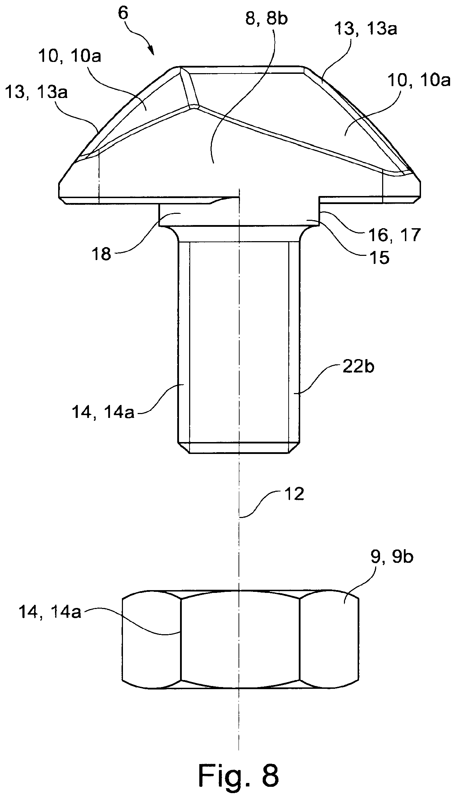

Gemäß den Fig. 1 bis 7 sind das Hammerkopfelement 8 als eine ein Innengewinde 7 aufweisende Hammerkopfmutter 8a und das Halteelement 9 als eine darin einschraubbare Schraube 9a ausgebildet, während bei der gemäß der Fig. 8 dargestellten Befestigungseinrichtung 6 das Hammerkopfelement 8 als eine Hammerkopfschraube 8b und das Halteelement 9 als eine darauf aufschraubbare Mutter 9b ausgebildet sind. Das Innengewinde 7 durchdringt dabei die Hammerkopfmutter 8a vollständig. Gemäß den Fig. 1 bis 7 stellt dabei das Innengewinde 7 eine Durchgangsöffnung 4' dar, die koaxial zur Durchgangsöffnung 4 im zweiten Bauteil 5 verläuft.

Gemäß der Figur 1 ist bei einer Befestigungseinrichtung 6 gemäß der ersten Alternative die Schraube 9a lediglich in dem Verfahrensschritt A angedeutet und kann eine herkömmliche Schraube mit einem Innenmehrkanteingriff und einem metrischen Außengewinde 22a sein. Die Hammerkopfmutter 8a weist dabei an einer der Nut 2 zugewandten Seite Ausrichtkonturen 10 (vergleiche auch die Figuren 3 sowie 5 bis 7) auf, die derart ausgebildet sind, dass sie die Hammerkopfmutter 8a bei einem Andrücken der Ausrichtkonturen 10 an die Nut 2 bzw. deren Nutflanken 11 (vergleiche Fig. 2) unabhängig von einer Winkelstellung um ihre Achse 12 in eine eintauchfähige Ausrichtung der Hammerkopfmutter 8a zur Nut 2 verdrehen. Dies ist mit bislang aus dem Stand der Technik bekannten Hammerkopfschrauben oder -elementen nicht möglich, da diese zumindest in einem gewissen Winkelbereich stets vorausgerichtet werden müssen, was einen nicht zu unterschätzenden zusätzlichen Montageaufwand darstellt.

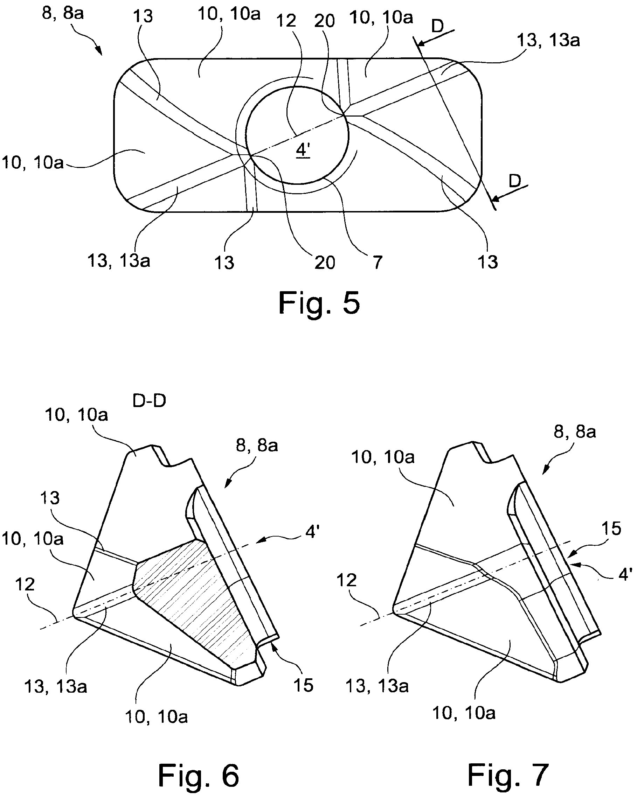

Die Ausrichtkonturen 10 sind dabei vergleichsweise steil ausgebildet und schließen beispielsweise im Wesentlichen einen rechten Winkel oder einen leicht stumpfen Winkel (vergleiche Fig. 7) miteinander ein, wodurch ein vergleichsweise einfaches Verdrehen der Hammerkopfmutter 8a oder der Hammerkopfschraube 8b beim Andrücken auf die Nutflanken 11 der Nut 2 und damit ein vergleichsweise einfaches Ausrichten der Hammerkopfmutter 8a oder der Hammerkopfschraube 8b parallel zur Nut 2 und ein Einführen derselben in die Nut 2 erreicht werden können.

Hierbei sei generell angemerkt, dass in den zuvor beschriebenen Absätzen und in der nachfolgenden Figurenbeschreibungen und in den Fig. 1 bis 7 stets von einer Hammerkopfmutter 8a mit einem Innengewinde 7 die Rede ist, in welches eine entsprechende Schraube 9a eingedreht wird, wobei selbstverständlich die Hammerkopfmutter 8a auch als Hammerkopfschraube 8b mit einem daran angeordneten Gewindeschaft mit Außengewinde 22b ausgebildet sein könnte, so dass in diesem Fall die Schraube 9a als Mutter 9b ausgebildet wäre, wie dies in Fig. 8 gezeigt ist. Die Montage der Befestigungseinrichtung 6 erfolgt dabei analog.

Um eine kostengünstige und zugleich qualitativ hochwertige Herstellung des Hammerkopfelements 8 erreichen zu können, sind die Ausrichtkonturen 10 vorzugsweise integral mit dem Hammerkopfelements 8, das heißt mit der Hammerkopfmutter 8a oder der Hammerkopfschraube 8b, ausgebildet. Zudem ist das Hammerkopfelement 8 bezüglich seiner Achse 12 punktsymmetrisch ausgebildet, wie dies aus der Fig. 5 eindeutig zu entnehmen ist. Die Achse 12 der des Hammerkopfelements 8 bzw. der Hammerkopfmutter 8a / Hammerkopfschraube 8b entspricht dabei der Achse 12 der Befestigungseinrichtung 6. Die Ausrichtkonturen 10 der Hammerkopfmutter 8a sind punktsymmetrisch zur Achse 12 der Hammerkopfmutter 8 ausgebildet, wie dies ebenfalls gemäß der Fig. 5 dargestellt ist. Eine derartige punktsymmetrische Ausbildung bietet den großen Vorteil, dass ein senkrechtes Aufsetzen der Hammerkopfmutter 8a / Hammerkopfschraube 8b auf die Nut 2 unabhängig von einer Drehwinkelstellung der Hammerkopfmutter 8a / Hammerkopfschraube 8b um ihre Achse 12 bei einem nachfolgenden Andrücken stets zu einem leichten Verdrehen und Ausrichten der Hammerkopfmutter 8a / Hammerkopfschraube 8b relativ zur Nut 2 und damit auch zu einem leichten Einführen der Hammerkopfmutter 8a / Hammerkopfschraube 8b in die Profilnut bzw. die Nut 2 führt.

Die Ausrichtkonturen 10 weisen dabei mehrere, ebenfalls punktsymmetrisch zur Achse 12 ausgerichtete und den zum Einführen der Hammerkopfmutter 8a / Hammerkopfschraube 8b in die Nut 2 erforderlichen Drall erzeugende Ausrichtschrägen 10a auf, wobei im vorliegenden Fall die Ausrichtkonturen 10 bzw. die Ausrichtschrägen 10a eine konvexe Form aufweisen, die den Drehvorgang zusätzlich unterstützt. Alternativ ist selbstverständlich auch eine konkave Formgebung der Ausrichtkonturen 10 bzw. der Ausrichtschrägen 10a vorstellbar.

Betrachtet man die Figuren 3 und 5 weiter, so kann man erkennen, dass zumindest zwei benachbarte Ausrichtkonturen 10 bzw. zwei benachbarte Ausrichtschrägen 10a über abgerundete Grate 13 miteinander verbunden sind. Diese abgerundeten Grate 13 verhindern dabei ein Verkanten und erleichtern ebenfalls den Montagevorgang des Hammerkopfelements 8, das heißt der Hammerkopfmutter 8a / Hammerkopfschraube 8b, in der Nut 2.

Um insbesondere auch ein unbeabsichtigtes sich selbst Lösen der Befestigungseinrichtung 6 zuverlässig verhindern zu können, kann an mittelbaren oder unmittelbaren Kontaktstellen zwischen dem Hammerkopfelement 8, das heißt der Hammerkopfmutter 8a / Hammerkopfschraube 8b, und dem Haltelement 9, das heißt der Schraube 9a oder der Mutter 9b, eine reibungserhöhende Schicht 14 oder Strukturierung 14a vorgesehen sein, die bei einem Drehen des Haltelements 9 zugleich auch ein Mitnehmen des Hammerkopfelements 8 bewirkt. Die reibungserhöhende Schicht 14 bzw. die ebenfalls die Reibung erhöhende Strukturierung 14a kann dabei am Innengewinde 7 der Hammerkopfmutter 8a und/oder am Außengewinde 22a der Schraube 9a angeordnet sein, oder an einem Außengewinde 22b der Hammerkopfschraube 8b und/oder an einem Innengewinde der Mutter 9b.

Betrachtet man darüber hinaus die Figuren 3, 4 sowie 6, 7 und 8, so kann man erkennen, dass das Hammerkopfelement 8 auf seiner den Ausrichtkonturen 10 abgewandten Seite einen Axialfortsatz 15 aufweist, der in Axialansicht bzw. in Axialrichtung gesehen zwei diagonal gegenüberliegende, rechtwinkelige Eckbereiche 16, kurz auch Nasen 17 genannt, aufweist, die über zwei gegenüberliegende, kreisbogenförmige Bereiche 18 ineinander übergehen, wobei die beiden Eckbereiche 16, das heißt die beiden Nasen 17, in einem Montagezustand nach einem vollständigen Eintauchen des Hammerkopfelements 8 in die Nut 2 lediglich ein Verdrehen des Hammerkopfelements 8 um 90 Grad in der Nut 2 erlauben und dann an den entsprechenden Nutflanken 11 drehbegrenzend anliegen, wodurch ein Anziehen der Befestigungseinrichtung 6 durch ein Anziehen der Schraube 9a oder der Mutter 9b ermöglicht wird.

Das Hammerkopfelement 8 bzw. das Haltelement 9 können dabei aus Metall, aus Kunststoff oder einer Kombination davon hergestellt sein, wodurch nicht nur eine kostengünstige, sondern auch bezüglich der gewünschten Eigenschaften nahezu beliebige Herstellung ermöglicht wird. Das erste Bauteil 3 kann beispielsweise als Profilstab 19 ausgebildet und insbesondere als Aluminiumstrangpressprofil hergestellt werden. Eine Querschnittsform des Hammerkopfelements 8 entspricht dabei im Wesentlichen einer lichten Geometrie der hinterschnittenen Nut 2 im ersten Bauteil 3, das heißt im vorliegenden Fall im Profilstab 19.

Betrachtet man die Figuren 3 und 5 sowie 6, so kann man des Weiteren erkennen, dass einzelne Grate 13 vom jeweiligen Eckbereich der Hammerkopfmutter 8a hin zur Durchgangsöffnung 4' verlaufen und dort an zwei gegenüberliegenden Punkten 20 jeweils drei Grate 13 aufeinander treffen. Dabei liegen zwei gegenüberliegende Grate 13a auf einer Geraden einer Diagonalen, während die beiden anderen Grate 13 bogenförmig ausgebildet sind. Hierdurch kann die erfindungsgemäße Verdrehung der Hammerkopfmutter 8a unabhängig von deren Drehwinkelaufsetzstellung auf die Nut 2 bzw. die Nutflanken 11 begünstigt werden. Dies gilt analog auch für ein als Hammerkopfschraube 8b ausgebildetes Hammerkopfelement 8.

Die Grate 13a kreuzen dabei die Achse 12, wogegen die übrigen Grate 13 die Achse 12 nicht kreuzen. Darüber hinaus kann man erkennen, dass sich die einzelnen Grate 13, 13a bei einem als Hammerkopfmutter 8a ausgebildeten Hammerkopfelement 8 an einem Rand der Durchgangsöffnung 4' an zwei gegenüberliegenden Punkten 20 treffen. Die beiden Grate 13a verlaufen dabei vom jeweiligen Eckbereich des als Hammerkopfmutter 8a ausgebildeten Hammerkopfelements 8 hin zur Durchgangsöffnung 4'. Bei einem als Hammerkopfschraube 8b ausgebildeten Hammerkopfelement 8 verlaufen die Grate 13, 13a analog, wobei jedoch die Durchgangsöffnung 4' nicht vorgesehen ist (vgl. Fig. 8).

Betrachtet man nun die Fig. 1a bis Fig.1e, so werden dort in den einzelnen Verfahrensschritten A - E die einzelnen Montageschritte der erfindungsgemäßen Befestigungsanordnung 1 erläutert. In Verfahrensschritt A wird zunächst die Schraube 9a durch die Durchgangsöffnung 4 des zweiten Bauteils 5 hindurch gesteckt und mit wenigen Umdrehungen mit der Hammerkopfmutter 8a verschraubt. Anschließend wird die Befestigungseinrichtung 6 zusammen mit dem zweiten Bauteil 5 in Richtung des damit zu verbindenden ersten Bauteils 3 bewegt, wobei sich die Hammerkopfmutter 8a auf die Nut 2 bzw. deren Nutflanken 11 aufsetzt, wie dies gemäß dem Verfahrensschritt B in Figur 1 dargestellt ist.

Im Verfahrensschritt C wird nun die Befestigungseinrichtung 6 auf die Nutflanken 11 gedrückt, wobei durch die Ausrichtkonturen 10 bzw. die Ausrichtschrägen 10a ein Verdrehen der Hammerkopfmutter 8a unabhängig von deren Ausgangsdrehstellung erfolgt und zwar so weit, bis die Hammerkopfmutter 8a zur Nut 2 ausgerichtet ist und in diese eintaucht. Anschließend wird ein Drehschrauber 21, beispielsweise ein Inbusschlüssel, drehfest mit der Schraube 9a verbunden und diese verdreht, woraufhin sich auch die Hammerkopfmutter 8a in der Nut 2 verdreht. Das Verdrehen der Hammerkopfmutter 8a wird dabei jedoch durch die beiden Nasen 17 auf eine 90 Grad-Verdrehung begrenzt, da dann die Nasen 17 bzw. die rechteckigen Eckbereiche 16 an den Nutenflanken 11 der Nut 2 anliegen und ein weiteres Verdrehen verhindern. Dieser Zustand ist im Verfahrensschritt D in Fig. 1d und in Fig. 2 gezeigt. Anschließend kann mit dem Drehschrauber 21, beispielsweise dem Inbusschlüssel, die Schraube 9a weiter angezogen und die Befestigungseinrichtung 6 und damit die Befestigungsanordnung 1 angezogen werden.

Von besonderem Vorteil bei der erfindungsgemäßen Befestigungsanordnung 1 mit dem Hammerkopfelement 8 ist, dass dieses unabhängig von seiner Drehwinkelstellung auf die Nut 2 aufgesetzt und durch ein einfaches Eindrücken in die Nut 2 einfach verdreht werden kann, ohne dass vorher ein aufwändiges Ausrichten erfolgen muss. Hierdurch kann der Montagevorgang deutlich vereinfacht werden.

## Patentansprüche

1. Befestigungsanordnung (1)
- mit einem eine hinterschnittene Nut (2) aufweisenden ersten Bauteil (3),
- mit einem eine Durchgangsöffnung (4) aufweisenden zweiten Bauteil (5),
- wobei das zweite Bauteil (5) über eine durch die Durchgangsöffnung (4) desselben geführte und senkrecht in die Nut (2) eingreifende Befestigungseinrichtung (6) am ersten Bauteil (3) fixierbar ist,
- wobei die Befestigungseinrichtung (6) eine Achse (12) aufweist, die bei montierter Befestigungseinrichtung (6) senkrecht zur Nut (2) ausgerichtet ist,
- wobei die Befestigungseinrichtung (6) ein Hammerkopfelement (8) und ein damit verschraubbares Halteelement (9) aufweist,
**dadurch gekennzeichnet,**
- **dass** das Hammerkopfelement (8) und das damit verschraubte Halteelement (9) in am zweiten Bauteil (5) montiertem Zustand unbegrenzt um die Achse (12) drehbar sind,
- **dass** das Hammerkopfelement (8) an einer der Nut (2) zugewandten Seite Ausrichtkonturen (10) aufweist, die derart ausgebildet sind, dass diese bei einem Andrücken an die Nut (2) unabhängig von der Drehstellung um die Achse (12) des Hammerkopfelements (8) eine eintauchfähige Ausrichtung des Hammerkopfelements (8) zur Nut (2) einstellen.

2. Befestigungsanordnung nach Anspruch 1,
**dadurch gekennzeichnet,**
- **dass** das Hammerkopfelement (8) als eine ein Innengewinde (7) aufweisende Hammerkopfmutter (8a) und das Halteelement (9) als eine darin einschraubbare Schraube (9a) ausgebildet sind, oder
- **dass** das Hammerkopfelement (8) als eine Hammerkopfschraube (8b) und das Halteelement (9) als eine darauf aufschraubbare Mutter (9b) ausgebildet sind.

3. Befestigungsanordnung nach Anspruch 2, erste Alternative,
**dadurch gekennzeichnet,**
**dass** das Innengewinde (7) die Hammerkopfmutter (8a) vollständig durchdringt.

4. Befestigungsanordnung nach einem der Ansprüche 1 bis 3,
**dadurch gekennzeichnet,**
**dass** die Ausrichtkonturen (10) mehrere punktsymmetrisch zur Achse (12) ausgerichtete und einen Drall erzeugende Ausrichtschrägen (10a) aufweisen.

5. Befestigungsanordnung nach Anspruch 4,
**dadurch gekennzeichnet,**
**dass** zwei benachbarte Ausrichtschrägen (10a) über abgerundete Grate (13, 13a) miteinander verbunden sind.

6. Befestigungsanordnung nach Anspruch 5,
**dadurch gekennzeichnet,**
**dass** sich die einzelnen Grate (13, 13a) bei einem als Hammerkopfmutter (8a) ausgebildeten Hammerkopfelement (8) an einem Rand der Durchgangsöffnung (4') an zwei gegenüberliegenden Punkten (20) treffen.

7. Befestigungsanordnung nach einem der vorhergehenden Ansprüche,
**dadurch gekennzeichnet,**
**dass** die Grate (13a) vom jeweiligen Eckbereich des als Hammerkopfmutter (8a) ausgebildeten Hammerkopfelements (8) hin zur Durchgangsöffnung (4') verlaufen.

8. Befestigungsanordnung nach einem der vorhergehenden Ansprüche,
**dadurch gekennzeichnet,**
**dass** an mittelbaren oder unmittelbaren Kontaktstellen zwischen dem Hammerkopfelement (8) und dem Halteelement (9) eine reibungserhöhende Schicht (14) oder Strukturierung (14a) vorgesehen ist, die bei einem Drehen des Halteelements (9) ein Mitnehmen des Hammerkopfelements (8) bewirkt.

9. Befestigungsanordnung nach Anspruch 2 und 8,
**dadurch gekennzeichnet,**
- **dass** die reibungserhöhende Schicht (14) oder Strukturierung (14a) an einem Innengewinde (7) der Hammerkopfmutter (8a) und/oder an einem Außengewinde (22a) der Schraube (9a) vorgesehen ist, oder
- **dass** die reibungserhöhende Schicht (14) oder Strukturierung (14a) an einem Außengewinde (22b) der Hammerkopfschraube (8b) und/oder an einem Innengewinde der Mutter (9b) vorgesehen ist.

10. Befestigungsanordnung nach einem der vorhergehenden Ansprüche,
**dadurch gekennzeichnet,**
**dass** das Hammerkopfelement (8) auf seiner den Ausrichtkonturen (10) abgewandten Seite einen Axialfortsatz (15) aufweist, der in Axialrichtung gesehen zwei diagonal gegenüberliegende rechtwinklige Eckbereiche (16), insbesondere Nasen (17), aufweist, die über zwei gegenüberliege kreisbogenförmige Bereiche (18) ineinander übergehen, wobei die beiden Eckbereiche (16) in einem Montagezustand nach einem Eintauchen des Hammerkopfelements (8) in die Nut (2) an den entsprechenden Nutflanken (11) drehbegrenzend anliegen.

11. Befestigungsanordnung nach einem der Ansprüche 1 bis 10,
**dadurch gekennzeichnet,**
- **dass** das Hammerkopfelement (8) und/oder das Halteelement (9) aus einem Metall, einem Kunststoff oder einer Kombination daraus hergestellt sind, und/oder
- **dass** das erste Bauteil (3) als Profilstab (19) ausgebildet ist.

## Claims

1. Fixing arrangement (1)
- with a first component (3) having an undercut groove (2),
- with a second component (5) having a passage opening (4),
- wherein the second component (5) can be fixed to the first component (3) via a fixing device (6) which is guided through a passage opening (4) of said second component and engages perpendicularly in the groove (2),
- wherein the fixing device (6) has an axis (12) which, in mounted state of the fixing device (6), is oriented perpendicularly to the groove (2),
- wherein the fixing device (6) has a hammerhead element (8) and a retaining element (9) which can be screwed thereto,
**characterised in that**
- in the state mounted on the second component (5), the hammerhead element (8) and the retaining element (9) screwed thereto are unrestrictedly rotatable about the axis (12),
- on a side facing the groove (2), the hammerhead element (8) has orientation contours (10) which are configured such that, when pressed onto the groove (2), independently of the rotary position of the hammerhead element (8) about the axis (12), said contours set an orientation of the hammerhead element (8) which allows it to plunge into the groove (2).

2. Fixing arrangement according to claim 1, **characterised in that**
- the hammerhead element (8) is configured as a hammerhead nut (8a) having an internal thread (7), and the retaining element (9) is configured as a screw (9a) which can be screwed therein, or
- the hammerhead element (8) is configured as a hammerhead screw (8b), and the retaining element (9) is configured as a nut (9b) which can be screwed thereon.

3. Fixing arrangement according to claim 2, first alternative, **characterised in that** the internal thread (7) passes completely through the hammerhead nut (8a).

4. Fixing arrangement according to any of claims 1 to 3, **characterised in that** the orientation contours (10) comprise several orientation diagonals (10a) which are oriented punctually symmetrically to the axis (12) and generate a twist.

5. Fixing arrangement according to claim 4, **characterised in that** two adjacent orientation diagonals (10a) are connected together via rounded ribs (13, 13a).

6. Fixing arrangement according to claim 5, **characterised in that** when the hammerhead element (8) is configured as a hammerhead nut (8a), the individual ribs (13, 13a) meet at two opposite points (20) on an edge of the passage opening (4').

7. Fixing arrangement according to any of the preceding claims, **characterised in that** the ribs (13a) run from the respective corner region of the hammerhead element (8) configured as a hammerhead nut (8a) up to the passage opening (4').

8. Fixing arrangement according to any of the preceding claims, **characterised in that** a friction-increasing coating (14) or structuring (14a) is provided at direct or indirect contact points between the hammerhead element (8) and the retaining element (9), and causes the hammerhead element (8) to be carried with the retaining element (9) on rotation thereof.

9. Fixing arrangement according to claim 2 and 8, **characterised in that**
- the friction-increasing coating (14) or structuring (14a) is provided on an internal thread (7) of the hammerhead nut (8a) and/or on an external thread (22a) of the screw (9a), or
- the friction-increasing coating (14) or structuring (14a) is provided on an external thread (22b) of the hammerhead screw (8b) and/or on an internal thread of the nut (9b).

10. Fixing arrangement according to any of the preceding claims, **characterised in that** on its side facing away from the orientation contours (10), the hammerhead element (8) has an axial extension (15) which, viewed in the axial direction, has two diagonally opposite, right-angled corner regions (16), in particular lugs (17), which transform into one another via two opposing arcuate regions (18), wherein in a mounted state, after plunging of the hammerhead element (8) in the groove (2), the two corner regions (16) lie against the corresponding groove flanks (11) so as to restrict rotation.

11. Fixing arrangement according to any of claims 1 to 10, **characterised in that**
- the hammerhead element (8) and/or the retaining element (9) are made of a metal, a plastic or a combination thereof, and/or
- the first component (3) is configured as a profiled rod (19).

## Revendications

1. Système de fixation (1)
- avec un premier composant (3) présentant une rainure en contre-dépouille (2),
- avec un second composant (5) présentant une ouverture traversante (4),
- dans lequel le second composant (5) peut être fixé sur le premier composant (3) par l'intermédiaire d'un appareil de fixation (6) qui est guidé à travers son ouverture traversante (4) et s'enclenche perpendiculairement dans la rainure (2),
- dans lequel l'appareil de fixation (6) présente un axe (12) qui est aligné perpendiculairement à la rainure (2) lorsque l'appareil de fixation (6) est monté,
- dans lequel l'appareil de fixation (6) présente un élément de tête de marteau (8) et un élément de maintien (9) qui peut être vissé sur celui-ci,
**caractérisé en ce que**
- l'élément de tête de marteau (8) et l'élément de maintien (9) vissé sur celui-ci peuvent tourner indéfiniment autour de l'axe (12) lorsqu'ils sont à l'état monté sur le second composant (5),
- l'élément de tête de marteau (8) présente, sur un côté tourné vers la rainure (2), des contours d'alignement (10) qui sont réalisés de sorte que, lorsqu'ils sont pressés contre la rainure (2), ils établissent un alignement immergeable de l'élément de tête de marteau (8) par rapport à la rainure (2), indépendamment de la position de rotation autour de l'axe (12) de l'élément de tête de marteau (8).

2. Système de fixation selon la revendication 1,
**caractérisé en ce que**
- l'élément de tête de marteau (8) est réalisé en tant qu'un écrou de tête de marteau (8a) présentant un filetage intérieur (7) et l'élément de maintien (9) est réalisé en tant qu'une vis (9a) pouvant être vissée dans celui-ci, ou
- l'élément de tête de marteau (8) est réalisé en tant qu'une vis de tête de marteau (8b) et l'élément de maintien (9) est réalisé en tant qu'un écrou (9b) qui peut être vissé sur celui-ci.

3. Système de fixation selon la revendication 2, première variante,
**caractérisé en ce que**
le filetage intérieur (7) traverse entièrement l'écrou de tête de marteau (8a).

4. Système de fixation selon l'une quelconque des revendications 1 à 3,
**caractérisé en ce que**
les contours d'alignement (10) présentent plusieurs biseaux d'alignement (10a) alignés par symétrie ponctuelle par rapport à l'axe (12) et produisant une torsion.

5. Système de fixation selon la revendication 4,
**caractérisé en ce que**
deux biseaux d'alignement adjacents (10a) sont connectés entre eux par des arêtes arrondies (13, 13a).

6. Système de fixation selon la revendication 5,
**caractérisé en ce que**
les arêtes individuelles (13, 13a) se rencontrent en deux points opposés (20) sur un bord de l'ouverture traversante (4') avec un élément de tête de marteau (8) réalisé comme un écrou de tête de marteau (8a).

7. Système de fixation selon l'une quelconque des revendications précédentes,
**caractérisé en ce que**
les arêtes (13a) s'étendent de la zone d'angle respective de l'élément de tête de marteau (8) formé en tant qu'un écrou de tête de marteau (8a) à l'ouverture traversante (4').

8. Système de fixation selon l'une quelconque des revendications précédentes,
**caractérisé en ce qu'**
une couche (14) ou structuration (14a) augmentant le frottement, qui entraîne l'élément de tête de marteau (8) lors de la rotation de l'élément de maintien (9), est prévue aux points de contact directs ou indirects entre l'élément de tête de marteau (8) et l'élément de maintien (9).

9. Système de fixation selon les revendications 2 et 8,
**caractérisé en ce que**
- la couche (14) ou structuration (14a) augmentant le frottement est prévue sur un filetage intérieur (7) de l'écrou de tête de marteau (8a) et/ou sur un filetage extérieur (22a) de la vis (9a), ou
- la couche (14) ou structuration (14a) augmentant le frottement est prévue sur un filetage extérieur (22b) de la vis de tête de marteau (8b) et/ou sur un filetage intérieur de l'écrou (9b).

10. Système de fixation selon l'une quelconque des revendications précédentes,
**caractérisé en ce que**
l'élément de tête de marteau (8) présente, sur son côté opposé aux contours d'alignement (10), un prolongement axial (15) qui, vu dans la direction axiale, présente deux zones d'angle à angle droit (16) diagonalement opposées, en particulier des ergots (17), qui se raccordent l'une à l'autre par l'intermédiaire de deux zones arquées opposées (18), dans lequel les deux zones d'angle (16) s'appuient, dans un état de montage, après l'immersion de l'élément de tête de marteau (8) dans la rainure (2), de manière à limiter la rotation contre les flancs de rainure correspondants (11).

11. Système de fixation selon l'une quelconque des revendications 1 à 10,
**caractérisé en ce que**
- l'élément de tête de marteau (8) et/ou l'élément de maintien (9) sont fabriqués à partir d'un métal, d'un plastique ou d'une combinaison de ceux-ci, et/ou
- le premier composant (3) est réalisé en tant qu'une barre profilée (19).
